# EUROPÄISCHE PATENTSCHRIFT

(11) **EP 4 290 746 B1**
(45) Veröffentlichungstag und Bekanntmachung des Hinweises auf die Patenterteilung: **12.03.2025**
(21) Anmeldenummer: 23178679.9
(22) Anmeldetag: 12.06.2023
(51) Int. Cl.: H02K 15/03

(54) **VERFAHREN UND VORRICHTUNG ZUR BESTÜCKUNG EINES PERMANENTMAGNETISCHEN LÄUFERS ODER STATORS EINER ELEKTRISCHEN MASCHINE MIT VORMAGNETISIERTEN EINZELMAGNETEN**
METHOD AND DEVICE FOR INSERTING PERMANENT MAGNET ROTOR OR STATOR OF AN ELECTRIC MACHINE WITH PREMAGNETIZED INDIVIDUAL MAGNETS
PROCÉDÉ ET DISPOSITIF DE MONTAGE D'UN ROTOR OU D'UN STATOR À AIMANTS PERMANENTS D'UNE MACHINE ÉLECTRIQUE À AIMANTS INDIVIDUELS PRÉMAGNÉTISÉS

(30) Priorität: 10.06.2022 DE 102022114620
(43) Veröffentlichungstag der Anmeldung: 13.12.2023
(73) Patentinhaber: haprotec GmbH, 97892 Kreuzwertheim-Wiebelbach (DE)
(72) Erfinder: Happ, Christian, 97892 Kreuzwertheim-Wiebelbach (DE); Happ, Jonas, 97892 Kreuzwertheim-Wiebelbach (DE); Ganapoler, Victor, 97892 Kreuzwertheim-Wiebelbach (DE)
(74) Vertreter: Spachmann, Holger

(56) Entgegenhaltungen:
- EP-A2- 2 381 563
- FR-A1- 2 976 423
- KR-A- 20090 035 778
- US-B2- 8 664 819

## Beschreibung

Die vorliegende Erfindung geht aus von einer Magnetübergabevorrichtung für die Magnetbestückung eines Magnetträgers, d.h. Läufer- oder Statorrohlings eines Elektromotors oder -generators mit Permanentmagneten.

Des Weiteren betrifft die vorliegende Erfindung ein Verfahren zur Übergabe von Magneten auf einen Magnetträger und ein System zur automatisierten Bestückung eines Magnetträgers eines Läufers oder Stators einer elektrischen Maschine mit Permanentmagneten.

### STAND DER TECHNIK

Aus dem Stand der Technik sind verschiedene Methoden bekannt, um Läufer von Elektromotoren/-generatoren mit Permanentmagneten zu bestücken. Derartige Permanentmagnetläufer werden in großer Zahl in Gleichstrommaschinen, insbesondere Nebenschluss-, Reihenschluss- oder Doppelschlussmotoren sowie in Drehstromsynchronmotoren oder -generatoren eingesetzt. Sie zeichnen sich dadurch aus, dass sie Permanentmagnete abwechselnder Polung entlang ihres Läuferumfangs aufweisen, deren Magnetisierung im Falle eines Motors einem rotierenden äußeren, durch stromdurchflossene Spulen erzeugten Statormagnetfeld folgt, und dadurch den Läufer in Drehung versetzt, bzw. im Falle eines Generators durch eine äußere mechanisch erzwungene Drehung des Läufers mittels des mitbewegten Permanentmagnetfelds in den äußeren Statorspulen Spannung induziert wird. Grundsätzlich sind solche Motoren als Synchronmotoren ausgelegt, d. h. die Läuferdrehung folgt der magnetischen Drehung des äußeren Statormagnetfeldes, wobei nur ein geringer Schlupfwinkel auftreten kann. Bei Überschreitung eines kritischen Schlupfwinkels kommt der Elektromotor zum Stehen. Permanenterregte Generatoren liefern Wechsel- bzw. Drehspannungen, deren Frequenz proportional der Läuferdrehzahl ist.

Insbesondere bei Permanentmagneten, die bereits vormagnetisiert sind, ergibt sich das Problem, dass diese beim Aufsetzen auf einen ferromagnetischen Läuferrohling vom Läuferrohling angezogen werden und sich gegenseitig abstoßen, so dass aufgrund der auftretenden magnetischen Kräfte eine exakte Platzierung an vorbestimmten Stellen des Läuferumfangs schwer möglich ist. Aus dem Stand der Technik sind Methoden bekannt, bei denen die Magnete von Hand einzeln nacheinander aufgesetzt und in einem Trockenofen zur Aushärtung eines Anheftungsklebers verbracht werden. Die eingesetzten Permanentmagnete bestehen aus Werkstoffen wie Neodym, die spröde sind und schnell zur Zersplitterung neigen, wobei insbesondere bei vormagnetisierten Magnetrohlingen, d.h. Magnetträgern, große Kräfte bei Annäherung an ein ferromagnetisches Material wirken. Läuferrohlinge sind meist aus ferromagnetischem Material, insbesondere aus Eisen-, Nickel- oder Kobaltmaterial bzw. Legierungen oder Mischungen davon gefertigt, um einen starken Magnetfluss und damit eine große Leistung des Elektromotors zu gewährleisten. Werden Magnete händisch aufgebracht, so wird eine abwechselnde Nord-/Südpolorientierung benachbarter Permanentmagnete von einem bestückenden Arbeiter sichergestellt, wobei Magnete beispielsweise mittels Greifer aufgenommen und an eine gewünschte Stelle am Läuferumfang des Läuferrohlings positioniert, werden können. Beim Versuch, die Magnete mit dem Greifer zu halten, können diese bei Annäherung an das ferromagnetische Material aus dem Greifer springen. Ein Untergreifen der Permanentmagnete kann dies verhindern, jedoch ergibt sich insbesondere bei Läuferrohlingen, die Aufnahmestege aufweisen, das Problem, dass bei Einsetzen der Magnete in Aufnahmenuten eines Läuferrohlings die Stege eine Wegnahme des Greifers behindern. Des Weiteren werden in der Regel nicht einzelne Magnete, sondern eine Reihe von Magneten entlang einer Längsachse eines Läuferrohlings angeordnet, um Läuferrohlinge verschiedener Länge und lang ausgestreckte Magnetreihen bestücken zu können, sowie die Gefahr des Durchbrechens eines einzelnen langen Magneten zu verhindern. Magnete gleicher Polung stoßen sich ab, so dass sich bei dem Absetzen einer Reihe von Magneten hohe Abstoßungskräfte ergeben, die eine händische Aufsetzung erschweren. Folglich ergibt sich beim händischen Aufsetzen die Gefahr, dass sich Magnete aufstellen, abdrehen oder aus den Läufernuten springen. Bei ungewollten Bewegungen der Magnete werden deren Kanten beschädigt, kleine Splitter setzen sich unter die Magnete und verhindern ein sauberes Ankleben von Magneten mittels einer Klebmasse an den Läuferrohling, so dass die gewünschte Robustheit nicht erreicht werden kann.

Des Weiteren ist aus dem Stand der Technik bekannt, dass Permanentmagnetrohlinge im unmagnetisierten Zustand auf einen Läuferrohling aufgesetzt werden und anschließend mittels eines Magnetisierungsvorganges magnetisiert werden können. Hierbei ergeben sich keine Probleme mit Abstoßungskräften beim Aufbringen der Magnetrohlinge auf den Läufer, jedoch muss in einem weiteren Arbeitsschritt der Läufer mit einer Bandage umwickelt werden, um die Rohlinge in Position zu halten, wobei diese anschließend einem polrichtigen Magnetisierungsmagnetfeld ausgesetzt werden, um die weissschen Bezirke der Permanentmagnete auszurichten.

In beiden oben genannten Fällen werden in der Regel die Magnete mittels Klebemittel an dem Läuferrohling befestigt, wonach das Klebemittel in einem Aushärtevorgang in einem Trockenofen ausgehärtet wird. Der Klebeauftrag auf dem Läuferrohling ist in der Regel ein handgeführtes Verfahren, bei dem ein Klebemittel auf den Läuferrohling aufgetragen wird. Das Klebemittel wird in der Regel von Hand aufgebracht und verteilt und danach die Permanentmagnete auf die vorgesehenen Flächen des Läuferrohlings aufgesetzt. Die Magnete sind am Läuferumfang abwechselnd in Süd- und Nordpol ausgerichtet. Diese Permanentmagnete oder Permanentmagnetrohlinge werden in Stangen oder Blistern bereitgestellt, wobei bei vormagnetisierten Permanentmagneten die Anziehungskräfte einen Aufsetzvorgang erheblich erschweren. Durch die Abstoßungskräfte können die vorher aufgebrachten Klebemittelflächen verschoben werden, so dass es erhebliche Qualitätsunterschiede bei der Befestigung der Magnete geben kann.

Somit ergeben sich nach den beiden vorgenannten Varianten die Probleme, dass der Klebemittelauftrag und damit die Klebequalität der Permanentmagnete an den Läuferrohlingen nicht gleichmäßig ist, dass durch die Abstoßungskräfte die Permanentmagnete beschädigt werden können, dass eine zusätzliche Bandagierung und ein Magnetisierungsvorgang beim Aufbringen von Permanentmagnetrohlingen und damit weitere Arbeitsschritte erforderlich sind, und dass aufgrund der händischen Arbeit nur geringe Durchlaufzeiten und hohe Lohnkosten entstehen.

Die DE 4235873 A1 beschreibt ein Verfahren zur Bestückung eines Läuferrohlings mit Permanentmagneten, wobei zunächst ein Grundkörper des Läuferrohlings mit einem Rahmen in Form eines Gitters ummantelt wird, und der Rahmen Öffnungen aufweist, die geeignet sind, Permanentmagnete aufzunehmen und zu befestigen. Die Permanentmagnete können aus einer axial zum Läufergrundkörper angeordneten Entnahmeeinrichtung entnommen und maschinell mit Hilfe einer Bestückungseinrichtung in die Öffnungen eingesetzt werden. Permanentmagnete werden mittels Klebemittel am Läuferrohling angeklebt. Zum Einsetzen werden die Permanentmagnete radial in die Öffnungen des Läufergrundkörpers eingesetzt. Dabei ergeben sich zwangsläufig Abstoßungskräfte, die die Nachteile des aus dem Stand der Technik beschriebenen Verfahrens ebenfalls mit sich bringen, so dass zumindest die Gefahr der Kantenabstoßung und Beschädigung der Permanentmagnete weiterhin besteht. Alternativ spricht die vorgenannte Druckschrift von einem axialen Aufschieben von Permanentmagneten in die Öffnungen, wobei ein eventuell vorhandener Klebemittelauftrag verschmiert und ungleichmäßig zwischen Permanentmagnet und Läufergrundkörper verteilt werden würde. Somit wird ein Verfahren zur Herstellung eines permanenterregten Läufers beschrieben, bei dem ein Rahmen am Außenumfang des Läufers als Positionierhilfe zum Aufbringen der Permanentmagnete verwendet wird und wobei die Öffnungen des Rahmens nach Größe und Form exakt den Abmessungen der einzusetzenden Permanentmagnete entspricht. Dabei werden sowohl die Seitenwände der Öffnungen als Führungselemente für die Permanentmagnete verwendet, bzw. solche Führungselemente an den Seitenwänden angeordnet, als auch die Permanentmagnete in radialer Richtung an den Außenumfang herangeführt und dabei eine Bestückungsmaschine verwendet. Weiterhin wird eine gattungsgemäße Verwendung von mehreren Magazinen gelehrt, aus denen heraus die Permanentmagnete zur Bestückung des Läufers entnommen werden.

In der DE 199 53 650 C2 wird die Herstellung von als Läuferscheiben dienenden Magnetringen aus Einzelmagnetbauteilen beschrieben, wobei gezielt die Nutzung der Handhabungs- und Zuführtechnik der Halbeiterindustrie angestrebt wird. Unter anderem werden dabei auch die zu positionierenden Einzelmagnetbauteile in Magazinen zusammengefasst, mindestens eins dieser Magazine wird zur Zuführung der Magnete in die Montageposition verwendet, zur Montage der Einzelmagnetbauteile kommt ein Roboter zum Einsatz, und das Ablösen der Magnete erfolgt unter ständigem kraft- oder formgeführten Bauteilkontakt.

Aus der DE 10 2004 027 036A1 ist ein Synchronmotor mit Rotor bekannt, bei dem Magnete durch Klemmelemente befestigt sind, wobei die Klemmelemente aus am Rotor und zwischen den Magneten angeordneten Stegen bestehen. Nuten sind so in die Stege eingebracht, dass sie ein zumindest abschnittsweises Aufweiten der Stege auf der am Rotor abgewandten Seite ermöglichen.

Die EP 2 381 563 A2 betrifft eine Magnetübergabevorrichtung für die Magnetbestückung eines Läuferrohlings eines Elektromotors oder -generators mit Permanentmagneten oder Permanentmagnetrohlingen, umfassend eine Magnetträgereinrichtung und eine Läuferführungseinrichtung, wobei die Magnetträgereinrichtung eine mehrteilige Aufnahmefläche zur Aufnahme und definierten Lagerung zumindest eines Permanentmagneten / Permanentmagnetrohlings umfasst, und die Läuferführungseinrichtung Einspannmittel zum Einspannen eines mit Magnetaufnahmenuten versehenen Läuferrohlings, Linearführungsmittel zur linearen Führung des Läuferrohlings in einer normal zur Läuferachse stehenden Führungsebene und Drehführungsmittel zur axialen Drehung des Läufers umfasst, wobei die Vorrichtung ausgelegt ist, zumindest den einen Permanentmagneten durch eine kombinierte translatorische und rotatorische Abstreifbewegung der Läuferführungseinrichtung und/oder der Magnetträgereinrichtung von der Aufnahmefläche der Magnetträgereinrichtung in eine Aufnahmenut des Läuferrohlings zu übergeben. Diese Vorrichtung und das Umsetzungsverfahren muss an jedem Magnetträgertyp angepasst werden und erfordert einen mechanisch komplexen Bewegungsablauf. Eine Permanentmagnetübergabe ist nur sequentiell möglich, so dass für eine Magnetträgerbestückung der Gesamtvorgang mehrmals wiederholt werden muss, so dass ein erheblicher Zeitaufwand notwendig wird.

Ziel der Erfindung ist es daher, eine Magnetübergabevorrichtung, ein Magnetübergabeverfahren und ein System zur automatisierten Bestückung von Magnetträgern eines Läufers oder Stators einer elektrischen Maschine mit Permanentmagneten vorzuschlagen, die eine hohe Arbeitsgeschwindigkeit, sowie eine qualitativ hochwertige Bestückungsqualität von Magnetträgern mit Permanentmagneten ermöglichen.

Diese Aufgaben werden durch eine Magnetübergabevorrichtung, ein Magnetübergabeverfahren von vormagnetisierten Einzelmagneten auf Magnetträgern eines Läufers oder Stators einer elektrischen Maschine mit Permanentmagneten/ Permanentmagnetrohlingen nach den unabhängigen Ansprüchen gelöst. Vorteilhafte Weiterentwicklungen der Erfindung sind Gegenstand der Unteransprüche.

### OFFENBARUNG DER ERFINDUNG

Die Erfindung betrifft ein Verfahren zur Bestückung eines permanentmagnetischen Läufers oder Stators einer elektrischen Maschine mit vormagnetisierten Einzelmagneten, wobei der Läufer oder Stator einen Magnetträger mit vordefinierten Aufnahmepositionen zur Aufnahme vormagnetisierter Einzelmagnete umfasst, wobei benachbarte Einzelmagnete alternierende Polungen N/S in Bezug auf Ihre Lage auf dem Magnetträger aufweisen.Es wird erfindungsgemäß vorgeschlagen, dass die Einzelmagnete zunächst kopfüber zur Lage in der Aufnahmeposition in Führungspositionen auf einer ersten Oberfläche eines Führungsträgers entsprechend ihrer Polung und Position auf dem Magnetträger temporär angeordnet werden, und ein Übertragungsmagnetträger benachbart zu einer zweiten Oberfläche des Führungsträgers angeordnet ist, die der ersten Oberfläche entgegengesetzt ist, wobei der Übertragungsmagnetträger benachbart alternierend gepolte Magnetbereiche umfasst, die gegenpolig zu den Einzelmagneten in den Führungspositionen auf dem Führungsträger sind, sodass die Einzelmagnete in den Führungspositionen auf dem Führungsträger temporär durch die Magnetbereiche des Übertragungsmagnetträger magnetisch fixiert sind, wonach der Führungsträger mit eingesetzten Einzelmagneten und dem Übertragungsmagnetträger in eine Übergabeposition benachbart zu entsprechenden Aufnahmepositionen der Einzelmagnete des Magnetträgers gebracht wird, und wonach durch eine Veränderung der relativen Position des Übertragungsmagnetträgers zum Führungsträgers und/oder einer Veränderung der magnetischen Polung der Magnetbereiche des Übertragungsmagnetträgers ein gesteuertes Umsetzen der Einzelmagnete vom Führungsträger auf den Magnetträger mittels magnetischer Abstoßungskräfte erfolgt.

Mit anderen Worten werden vormagnetisierte Einzelmagnete zunächst auf Führungspositionen des Führungsträgers abgelegt. Dabei kann bereits der Übertragungsmagnetträger auf der gegenüberliegenden Oberfläche des Führungsträgers angeordnet sein, um mittels magnetischer Anziehung die Einzelelemente in den Führungspositionen temporär zu halten. Die Führungspositionen ebenso wie die Aufnahmepositionen können mechanisch formkomplementäre Vertiefungen oder Halteelemente zum mechanischen Positionieren der Einzelmagnete umfassen.

Nach einem Bestücken des Führungsträgers wird dieser zusammen mit dem hierzu lagefixierten Übertragungsmagnetträger in unmittelbarer räumlicher Nähe zum Magnetträger des Läufers oder Stators der zu bestückenden Maschine verbracht.

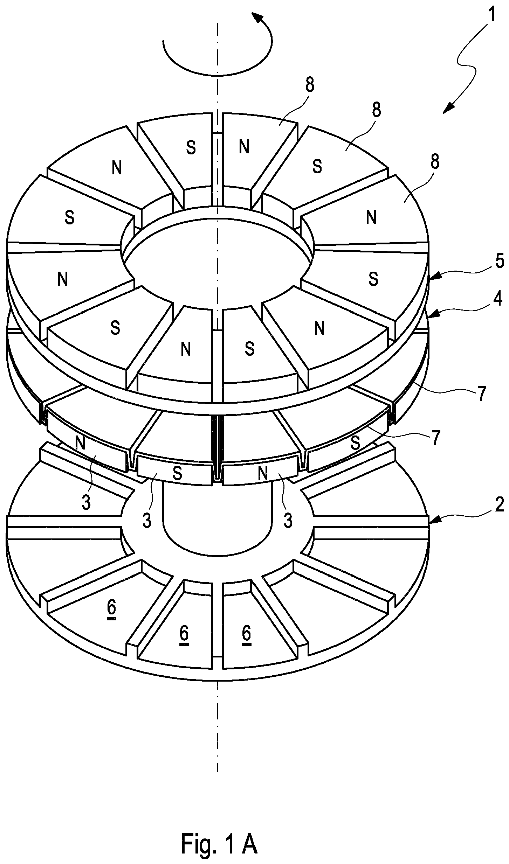

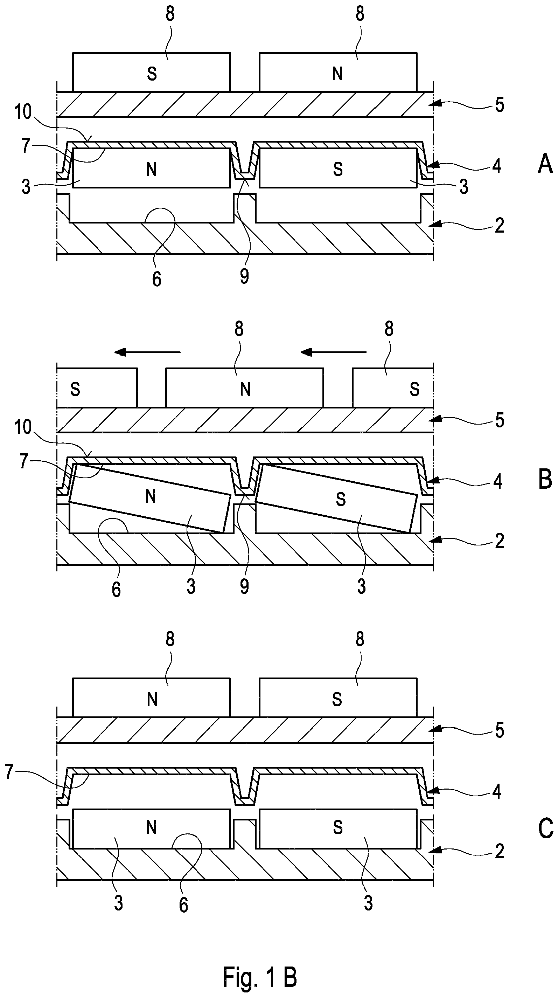

Durch eine Relativbewegung des Übertragungsmagnetträger gegenüber dem Führungsträger bzw. einer Veränderung der Polung der Magnetbereiche des Übertragungsmagnetträgers werden magnetische Abstoßungskräfte auf die Einzelmagnete derart ausgeübt, dass diese aus den Führungspositionen gesteuert mittels eines definierbaren Übergabeimpulses in die Aufnahmepositionen des Magnetträgers übergesetzt werden. Dieser Übergabeimpuls kann zunächst ein Überschnappen eines Seitenbereichs des Einzelmagneten bewirken, wie dies in den Figs. 1 bis 3 dargestellt ist und an späterer Stelle noch näher erläutert wird. Die Relativbewegung kann sowohl ein seitliches, d.h. paralleles Verschieben des Übertragungsmagnetträgers zum Führungsträger oder ein axiales Verschieben zur Vergrößerung der Distanz zwischen Übertragungsmagnetträgers zum Führungsträger sein. Bevorzugt kann eine Kombination von parallelem und axialem Verschieben erfolgen, um sowohl durch eine zunehmende axiale Beabstandungsdistanz als auch durch eine sich änderten Polarität, die durch eine Parallelverschiebung zwischen Magnetbereichen des Übertragungsmagnetträger und den Einzelmagneten bewirkt wird, die Einzelmagnete aus dem Führungsträger in den Magnetträger versetzt werden.

Die Aufnahmeposition des Magnetträgers und/oder die Führungsposition des Führungsträgers kann formangepasst bzw. komplementär zu den Einzelmagneten ausgestaltet sein, insbesondere Vertiefungen, Aussparungen oder andere mechanische Fixierelemente aufweisen, kann aber auch ohne besondere Fixierungselemente ausgestaltet, d.h. glatt oder eben ausgestaltet sein.

Durch den vorstehend erörterten erfindungsgemäßen Verfahrensablauf werden die eingangs erwähnten Nachteile des Stands der Technik zumindest größtenteils überwunden. Das erfindungsgemäße Verfahren ermöglicht ein präzises und gleichzeitig materialschonendes Umsetzen der Einzelmagnete in den Magnetträger, sodass diese exakt und beschädigungsfrei in den Magnetträger einsetzbar sind. Gleichzeitig wird auf vorteilhafte Weise einem Verschmieren eines bevorzugt vorhandenen Klebemittels zur Fixierung der Einzelmagnete vorgebeugt. Das erfindungsgemäße Verfahren ermöglicht insofern eine konstant hohe Bestückungsqualität bei gleichzeitig hohem Arbeitstempo und Automatisierungsgrad und ist somit vorteilhafterweise besonders effizient und kostengünstig.

In einer vorteilhaften Weiterbildung des Verfahrens bestehen die Magnetbereiche des Übertragungsmagnetträgers aus Einzelmagneten oder sind durch elektromagnetische Elemente, insbesondere Spulenelemente oder Magnetfeldjoche eines Elektromagneten ausgebildet. Die Bildung der Magnetbereiche durch Einzelmagnete bietet vorteilhafterweise die Möglichkeit einer einfachen und kostengünstigen Herstellung sowie eine hohe Robustheit. Die Bildung aus elektromagnetischen Elementen bietet hingegen den Vorteil, dass die Magnetisierung der Magnetbereiche bei Bedarf nahezu unverzüglich abschaltbar und wiederanschaltbar ist, sodass ggf. störende magnetische Interaktionen (Abstoßungen) sicher vermeidbar sind. Insbesondere wird im Falle der Einzelmagnete das Umsetzen durch eine Relativbewegung des Übertragungsmagnetträgers zu dem Führungsträger bewirkt, im Falle der elektromagnetischen Elemente hingegen durch das An- bzw. Abschalten der Magnetisierung der Magnetbereiche. Je nach Ausbildung ergeben sich hierdurch weitere Vorteile hinsichtlich Konstruktion, Betriebsweise und Komplexität der entsprechenden zur Durchführung des Verfahrens ausgebildeten Vorrichtung.

Bevorzugt sind die Magnetbereiche bzw. die diese ausbildenden Einzelmagnete oder elektromagnetischen Elemente lösbar, insbesondere zerstörungsfrei lösbar, mit dem Übertragungsmagnetträger verbunden bzw. auf diesem angeordnet, beispielsweise durch Kraft- und/oder Formschluss. Vorteilhafterweise können die Einzelmagnete oder elektromagnetischen Elemente dadurch bei Bedarf ausgetauscht werden, beispielsweise bei Beschädigungen oder zu Anpassungszwecken.

Alternativ können die Magnetbereiche auch fest, insbesondere kraft-, form und/oder stoffschlüssig mit dem Übertragungsmagnetträger verbunden sein, beispielsweise angeklebt oder aufgesintert.

In einer vorteilhaften Weiterbildung des Verfahrens erfolgt das Umsetzen der Einzelmagnete vom Führungsträger auf den Magnetträger durch Veränderung der relativen Lage der Magnetbereiche des Übertragungsmagnetträgers zu den Einzelmagneten des Führungsträgers mittels Parallelverschiebung und/oder Axialverschiebung der Magnetbereiche zu der zweiten Oberfläche des Führungsträgers, insbesondere Drehung oder Relativverschiebung des Übertragungsmagnetträgers zum Führungsträger, sodass sich die Position der Magnetbereiche des Übertragungsmagnetträgers gegenüber den Führungspositionen des Führungsträgers derart ändert, dass durch Magnetkraft ein gesteuerter Ablöseimpuls auf jeden Einzelmagnet ausgeübt wird, so dass dieser aus der Führungsposition auf die zugeordnete Aufnahmeposition des Magnetträgers, bevorzug zunächst einseitig, später zweiseitig, übergeht.

In einer vorteilhaften Weiterbildung des Verfahrens erfolgt das Umsetzen der Einzelmagnete vom Führungsträger auf den Magnetträger durch Veränderung der magnetischen Polung der Magnetbereiche des Übertragungsmagnetträgers derart, dass sich deren magnetische Polarität kontinuierlich oder stufenweise derart ändert, dass jeder Einzelmagnet mittels magnetischer Abstoßungskraft der Magnetbereiche des Übertragungsmagnetträgers aus der Führungsposition des Führungsträgers auf die zugeordneten Aufnahmeposition des Magnetträgers umgesetzt wird. Vorteilhafterweise ist dadurch ein besonders präzises Umsetzen der Einzelmagnete ermöglicht.

In einer vorteilhaften Weiterbildung des Verfahrens ist der Führungsträger mit Führungspositionen formkomplementär zu dem Magnetträger mit Aufnahmepositionen ausgebildet und der Übertragungsmagnetträger mit Magnetbereichen formkomplementär zum Führungsträger mit Führungsposition ausgebildet, wobei Magnetträger, Führungsträger und Übertragungsmagnetträger insbesondere stangenförmig, scheibenförmig, innenzylindermantel- oder außenzylindermantelförmig ausgebildet sind. Somit sind vorteilhafterweise gängige Arten von Magnetträger., insbesondere Linearmaschinen, Scheibenläufer- bzw. Scheibenstatoren, Innen- oder Außenläufermaschinen mit Permanentmagneten entweder Stator- oder Läuferseitig bestückbar. Weitere Geometrien des Magnetträgers sind ebenfalls denkbar und können mittels geeigneter Formanpassung von Führungs- und Übertragungsmagnetträger ebenfalls bestückt werden.

In einer vorteilhaften Weiterbildung des Verfahrens wird auf den den Aufnahmepositionen des Magnetträgers zugewandten Oberflächen der Einzelmagnete vor oder nach dem Aufsetzen in die Führungspositionen des Führungsträgers eine Haftschicht aufgebracht. Bei der Haftschicht handelt es sich im Wesentlichen um ein die Anhaftung der Einzelmagnete an dem Magnetträger förderndes Mittel, beispielsweise ein Klebemittel oder dergleichen. Vorteilhafterweise werden die Einzelmagnete dadurch verliersicher auf dem Magnetträger fixiert. Die Haftkraft des entsprechenden Klebemittels ist bevorzugt höher als Abstoßungs- bzw. Anziehungskräfte der Einzelmagnete untereinander.

In einer vorteilhaften Weiterbildung des Verfahrens besteht der Führungsträger aus einem ferromagnetischen Material, insbesondere einem Material mit Eisen, Nickel-oder Kobaltbestandteilen, oder aus einem paramagnetischen Material, insbesondere Aluminium oder Kunststoff. Je nach Materialauswahl ergeben sich dadurch verschiedene Vorteile hinsichtlich Herstellungskosten und Robustheit.

In einem nebengeordneten Aspekt betrifft die Erfindung eine Vorrichtung zum Bestücken eines permanentmagnetischen Läufers oder Stators einer elektrischen Maschine mit vormagnetisierten Einzelmagneten nach dem vorgenannten Verfahren, wobei der Läufer oder Stator einen Magnetträger mit vordefinierten Aufnahmepositionen zur Aufnahme vormagnetisierter Einzelmagnete umfasst.

Es wird erfindungsgemäß vorgeschlagen, dass zumindest ein Führungsträger und zumindest ein Übertragungsmagnetträger umfasst sind, wobei deren relative Position zueinander und zu dem Magnetträger und/oder eine Polung der Magnetbereiche des Übertragungsmagnetträgers zu den Führungspositionen des Führungsträgers veränderlich ist.

Vorzugsweise weist die Vorrichtung Mittel, insbesondere Aktuatoren, Lager und/oder Handhabungseinrichtungen, zur axialen Verlagerung, insbesondere Rotation, und/oder Fixierung bzw. Arretierung in zumindest einer festlegbaren Fixierposition von Führungsträger, Übertragungsmagnetträger und/oder Magnetträger auf. Beispielsweise ist durch diese Mittel der Magnetträger und/oder der mit den Einzelmagneten vorbestückte Führungsträger in die Vorrichtung einsetzbar und/oder der Übertragungsmagnetträger zum Halten der Einzelmagnete in den Führungspositionen und Bezug auf den Führungsträger anordenbar sowie in einer festlegbaren Position arretierbar. Vorteilhafterweise ist dadurch die Handhabung der einzelnen Komponenten vereinfacht sowie der Automatisierungsgrad erhöht.

Durch die Erfindung kann insbesondere eine simultane Umsetzung aller Einzelmagnete auf einen Magnetträger erreicht werden. Durch die gesteuerte Umsetzbewegung ist der mechanische Impuls beim Umsetzen und eine daraus resultierende potenzielle Beschädigung der Einzelmagnete minimiert. Der Einsatz des Bestückungsverfahrens eignet sich bevorzugt in einer Serienproduktion und ermöglicht eine kostengünstige, zuverlässige und schnell an verschiedene Magnetträgergeometrien anpassbare Magnetbestückung.

Die erfinderische Idee kann sowohl für Rotationsmaschinen wie auch für Linearmaschinene angewendet werde, und kann eine Magnetumsetzen auf eine runde oder gebogene Oberfläche, aber auch auf eine gerade oder ebene Oberfläche eines Magnetträgers ermöglichen.

### ZEICHNUNGEN

Weitere Vorteile ergeben sich aus der vorliegenden Zeichnungsbeschreibung. In den Zeichnungen sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- **Fig. 1**: Eine vereinfachte Schemadarstellung einer vorteilhaften Vorrichtung zur Durchführung eines vorteilhaften Umsetzverfahrens zur Umsetzung von Einzelmagneten auf einen Magnetträger gemäß einem ersten Ausführungsbeispiel;
- **Fig.1B**: Eine vereinfachte Schemadarstellung der Durchführung des Umsetzverfahrens aus Fig.1A;
- **Fig. 2A**: Eine vereinfachte Schemadarstellung der Vorrichtung gemäß einem zweiten Ausführungsbeispiel;

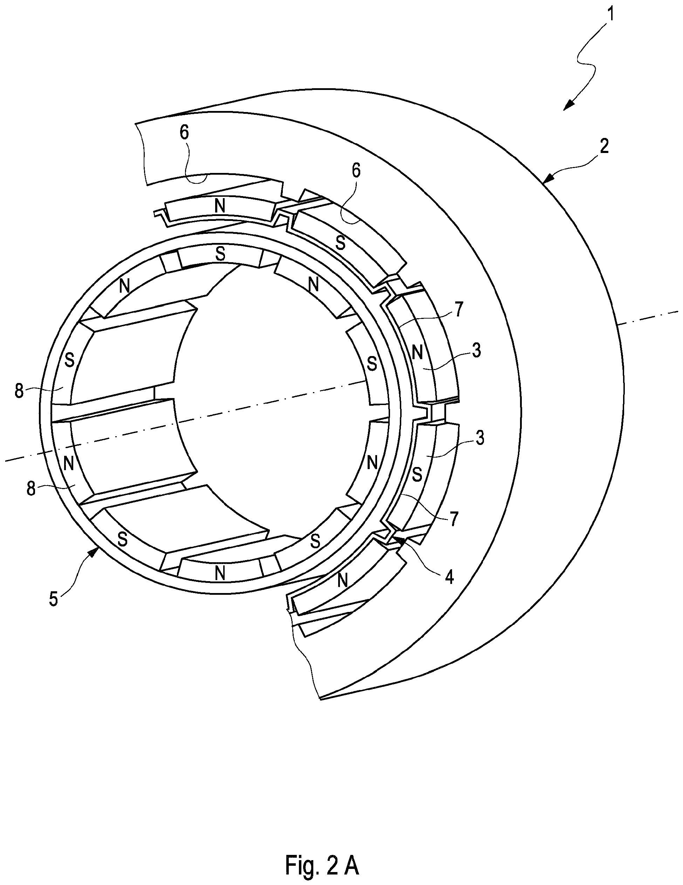

- **Fig. 2A**: Eine vereinfachte Schemadarstellung der Durchführung des Umsetzverfahrens aus Fig.2A

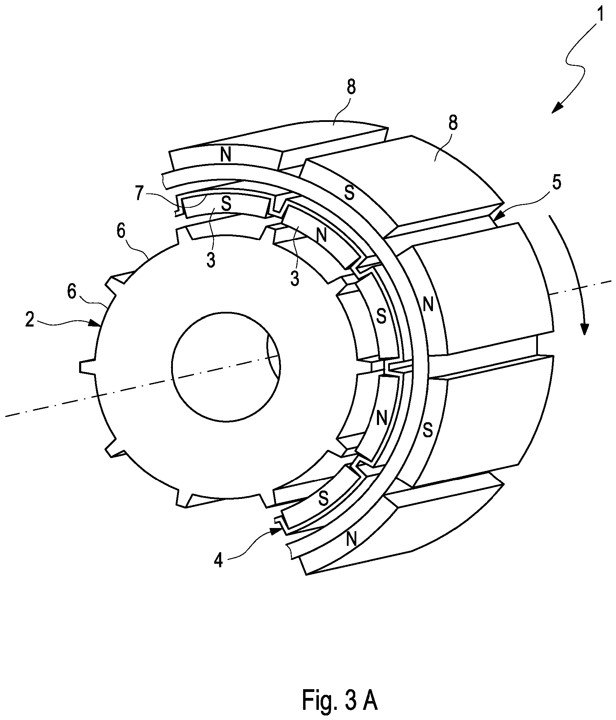

- **Fig. 3A**: Eine vereinfachte Schemadarstellung der Vorrichtung gemäß einem dritten Ausführungsbeispiel; und.

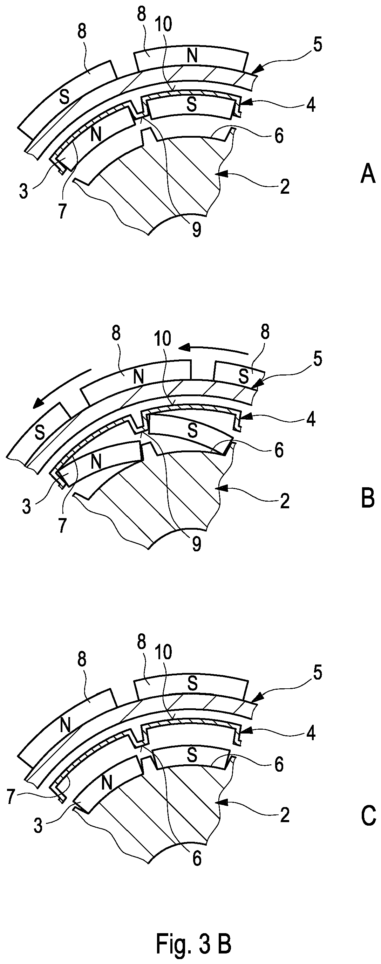

- **Fig. 3B**: Eine vereinfachte Schemadarstellung der Durchführung des Umsetzverfahrens aus Fig.3A.

In den Figuren sind gleichartige Elemente mit gleichen Bezugszeichen beziffert. Die Figuren zeigen lediglich Beispiele und sind nicht beschränkend zu verstehen.

Figur 1A zeigt eine vereinfachte Schemadarstellung einer vorteilhaften Vorrichtung 1 zum Bestücken eines permanentmagnetischen Läufers oder Stators einer elektrischen Maschine. Die Vorrichtung 1 ist dazu ausgebildet, ein an späterer Stelle näher erläutertes Verfahren zur Bestückung eines Magnetträgers 2 des Stators oder Läufers durchzuführen. Aus Übersichtlichkeitsgründen ist der Läufer bzw. Stator vorliegend nicht gezeigt, sondern nur der besagte Magnetträger 2.

Das mittels der Vorrichtung 1 durchführbare Verfahren dient dazu, eine Mehrzahl von vormagnetisierten Einzelmagneten 3 auf den Magnetträger 2 umzusetzen bzw. in diesen einzusetzen. Die Vorrichtung 1 weist einen Führungsträger 4 sowie einen Übertragungsmagnetträger 5 auf, die im wesentlichen formkomplementär zu dem Magnetträger 2 ausgebildet und unabhängig voneinander verlagerbar, insbesondere rotierbar, sind. Die Vorrichtung 1 weist insofern weiterhin vorliegend aus Übersichtlichkeitsgründen nicht gezeigte Mittel zur Verlagerung bzw. Anordnung des Führungsträgers 4 und des Übertragungsmagnetträgers 5 auf. Insbesondere ist durch diese Mittel oder weitere Mittel auch der Magnetträger 2 verlagerbar bzw. handhabbar, beispielsweise in die Vorrichtung 1 einbringbar.

Gemäß dem in Figur 1A gezeigten ersten Ausführungsbeispiel ist der Magnetträger 2 als Scheibenläufer bzw. Flachläufer ausgebildet.

Zum Beginn des mittels der Vorrichtung 1 durchführbaren Verfahrens ist vorgesehen, dass der Magnetträger 2, der Führungsträger 4 und der Übertragungsmagnetträger 5 im Wesentlichen deckungsgleich bzw. miteinander fluchtend zueinander angeordnet werden. Hierbei ist, wie in Figur 1A gut zu erkennen ist, der Führungsträger 4 zwischen dem Übertragungsmagnetträger 5 und dem Magnetträger 2 angeordnet, sodass der Führungsträger mit einer ersten Oberfläche 9 dem Magnetträger 2 und mit einer der ersten Oberfläche 9 gegenüberliegenden zweiten Oberfläche 10 dem Übertragungsmagnetträger 5 zugewandt ist.

Der Magnetträger 2 weist eine Vielzahl vordefinierter, vorliegend keilförmig ausgebildeter, Aufnahmepositionen 6 auf, die zur Aufnahme der Einzelmagnete 3 dienen bzw. ausgebildet sind. Hierbei ist vorgesehen, dass die Einzelmagnete 3 in Bezug auf die jeweils benachbarten Einzelmagnete 3 alternierend in den Aufnahmepositionen 6 angeordnet werden. In anderen Worten ist vorgesehen, dass die beiden zu einem Einzelmagneten 3 jeweils benachbarten Einzelmagnete 3 eine in Bezug auf den einen Einzelmagneten 3 entgegengesetzte Polung aufweisen, wie in Figur 1, A anhand der Bezeichnungen N und S dargestellt ist. Die Bezeichnungen N und S (Nord/Süd) symbolisieren insofern die Polorientierung an der Außenseite der Einzelmagnete 3.

Bevor die Einzelmagnete 3 auf den Magnetträger 2 umgesetzt werden, wurden diese in einem vorgelagerten Schritt in bzw. auf dem Führungsträger 4 eingebracht bzw. angeordnet. Zu diesem Zweck weist der Führungsträger 4 im wesentlichen formkomplementär zu den Einzelmagneten 3 ausgebildete Führungspositionen 7 auf, in welchen die Einzelmagnete 3 lösbar lagerbar sind. Die Lagerung der Einzelmagnete 3 in den Führungspositionen 7 erfolgt vorliegend auf magnetische Weise mittels des Übertragungsmagnetträgers 5, wie an späterer Stelle noch genauer erläutert wird.

Die Führungsposition 7 sind, wie in Figur 1A gut zu erkennen ist, gespiegelt zu den Aufnahmepositionen 6 des Magnetträgers 2 angeordnet. In anderen Worten ist bzw. wird der Führungsträger 4 in Bezug auf den Magnetträger 2 derart angeordnet, dass sich die Aufnahmepositionen 6 und die Führungspositionen 7 gegenüberliegen bzw. miteinander fluchten. Sowohl die Aufnahmepositionen 6, als auch die Führungspositionen 7 weisen zur Aufnahme der Einzelmagnete 3 ausgebildete Vertiefungen zur mechanisch fixierten Aufnahme der Einzelmagnete 3 auf.

Vor dem Umsetzen auf den Magnetträger 2 werden die Einzelmagnete 3 in dem Führungsträger 4 mittels des Übertragungsmagnetträgers 5 gehalten, wie vorstehend bereits erwähnt. Im Folgenden wird der Übertragungsmagnetträger 5 auch als Setzplatte bezeichnet.

Der Übertragungsmagnetträger 5 bzw. die Setzplatte ist im wesentlichen formkomplementär zu dem Führungsträger 4 und dem Magnetträger 2 ausgebildet. Zum Halten der Einzelmagnete 3 in dem Führungsträger 4 weist der Übertragungsmagnetträger 5 benachbart alternierend gepolte Magnetbereiche 8 auf. Bei diesen Magnetbereichen 8 handelt es sich bevorzugt um lösbare oder insbesondere fest mit dem Übertragungsmagnetträger 5 verbundene Einzelmagnete und/oder um elektromagnetische Elemente wie beispielsweise Spulenelemente oder Magnetfeldjoche. Insbesondere ist somit für den Fall, dass die Magnetbereiche 8 durch elektromagnetische Elemente gebildet sind, die Magnetisierung des Übertragungsmagnetträgers 5 bzw. von dessen Magnetbereichen 8 steuerbar.

Durch die zwischen den Magnetbereichen 8 und den in dem Führungsträger 4 angeordneten Einzelmagneten 3 wirkenden magnetischen Kräfte werden die Einzelmagnete 3 in dem Führungsträger 4 bzw. den Führungspositionen 7 gehalten. Im Verlauf des im Folgenden näher beschriebenen Verfahrens zum Umsetzende Einzelmagnete 3 von dem Führungsträger 4 auf den Magnetträger 2 sind durch eine Verlagerung, insbesondere Rotation, des Übertragungsmagnetträgers 5 und/oder eine Veränderung der Polarisierung der Magnetbereiche 8 die Einzelmagnete 3 von dem Führungsträger 4 auf den Magnetträger 2 in die entsprechenden Aufnahmepositionen 6 umsetzbar.

Das Verfahren soll nunmehr anhand von Figur 1B näher erläutert werden.

Zum Beginn des Verfahrens werden in einem ersten Schritt A der Magnetträger 2, der Führungsträger 4 und der Übertragungsmagnetträger 5 im Wesentlichen deckungsgleich bzw. fluchtend zueinander angeordnet, wobei in einem vorgelagerten Schritt die Einzelmagnete 3 in die Führungspositionen 7 des Führungsträgers 4 eingesetzt wurden und dort in ihrer Position mittels der Magnetbereiche 8 des Übertragungsmagnetträgers 5 gehalten sind. Die Anordnung von Magnetträger 2, Führungsträger 4 und Übertragungsmagnetträger 5 erfolgt dabei derart, dass die Einzelmagnete 3 zunächst kopfüber zur Lage in den Aufnahmepositionen 6 in den Führungspositionen 7 entsprechend ihrer Polung und vorgesehenen Position auf dem Magnetträger 2 temporär angeordnet werden. Die Führungspositionen 7 befinden sich insofern auf der ersten Oberfläche 9 des Führungsträgers 4. Der Übertragungsmagnetträger 5 wiederum wird benachbart zu der zweiten Oberfläche 10 des Führungsträgers, die der ersten Oberfläche 9 gegenüberliegt, angeordnet. Wie zuvor bereits erwähnt, werden die Einzelmagnete 3 dabei durch die Magnetbereiche 8 des Übertragungsmagnetträgers 5 magnetisch in den Führungspositionen 7 gehalten bzw. fixiert.

In einem zweiten Schritt B beginnt das Umsetzen der Einzelmagnete 3 aus den Führungspositionen 7 in die vorgesehenen Aufnahmepositionen 6. Hierzu wird gemäß dem vorliegenden Ausführungsbeispiel der Übertragungsmagnetträger 5 bzw. die Setzplatte relativ zu dem Führungsträger 4 um ca. eine halbe Einzelmagnetbreite verdreht bzw. verlagert, sodass jeder Einzelmagnet 3 einseitig einem abstoßenden Magnetfeld eines benachbarten Magnetbereichs 8 ausgesetzt wird. Hierdurch ergibt sich ein halbseitiger Umsetzimpuls von den Führungsposition 7 zu den Aufnahmepositionen 6. In anderen Worten wird durch eine Veränderung der relativen Position des Übertragungsmagnetträgers 5 zum Führungsträger 4 mittels magnetischer Abstoßungskräfte ein gesteuertes Umsetzen der Einzelmagnete 3 vom Führungsträger 4 auf den Magnetträger 2 bewirkt. Durch Steuerung der Geschwindigkeit der Relativposition, gegebenenfalls im Verbund mit einer axialen Entfernungsbewegung von Übertragungsmagnetträger 5 zu Führungsträger 4, ist eine simultane Umsetzbewegung aller Einzelmagnete 3 exakt steuerbar. Mit zunehmender Verdrehung bzw. Verlagerung des Übertragungsmagnetträgers 5 bzw. der Magnetbereiche 8 werden die anziehenden Kräfte zwischen den Einzelmagneten 3 und den Magnetbereichen 8 zunehmend geringer und die abstoßenden Kräfte zunehmend größer, da sich irgendwann gleich gepolte Magnetbereiche 8 und Einzelmagnete 3 gegenüberliegen.

In einem letzten Schritt C werden die Einzelmagnete 3 schließlich durch die abstoßenden Magnetkräfte aus den Führungspositionen 7 heraus bewegt und fallen in die Aufnahmepositionen 6 des Magnetträgers 2. In anderen Worten werden die Einzelmagnete 3 mittels der Magnetbereiche 8 aus den Führungspositionen 7 gedrückt und anschließend in den Aufnahmepositionen 6 temporär fixiert. Im Anschluss werden die Einzelmagnete 3 in den Aufnahmepositionen 6 bzw. dem Magnetträger 2 fest fixiert, beispielsweise mittels einer Haftschicht im Vorfeld oder nachträglich auf die Einzelmagnete 3 aufgebrachten Haftschicht.

Wie vorstehend beschrieben, erfolgt gemäß dem vorliegenden Ausführungsbeispiel das Umsetzen der Einzelmagnete 3 durch eine Verlagerung der Magnetbereiche 8 bzw. des Übertragungsmagnetträgers 5 relativ zu den Einzelmagneten 3. Zusätzlich oder alternativ kann weiterhin vorgesehen sein, dass auch die magnetische Polung der Magnetbereiche 8 veränderlich ist und durch eine kontinuierliche oder stufenweise Veränderung der Polung das Umsetzen der Einzelmagnete 3 bewirkt wird.

In diesem Fall sind die Magnetbereiche 8 insbesondere als die zuvor erwähnten elektromagnetischen Elemente ausgebildet, die bekanntermaßen eine steuerbare Magnetisierung ermöglichen. Somit ist insbesondere dann, wenn die Einzelmagnete 3 mittels des Führungsträgers 4 in ihre vorgesehene Umsetzposition verbracht worden sind, die Magnetisierung der Magnetbereiche 8 stufenweise oder kontinuierlich abschaltbar oder veränderbar, sodass die Einzelmagnete 3 aufgrund der ausbleibenden magnetischen Anziehungswirkung und/oder der aus der Veränderung der Polung resultierenden Abstoßwirkung nicht mehr durch die Magnetbereiche 8 in den Führungspositionen 7 gehalten werden, sondern ab einem bestimmten Zeitpunkt aus diesen heraus in die Aufnahmepositionen 6 fallen oder gedrückt werden.

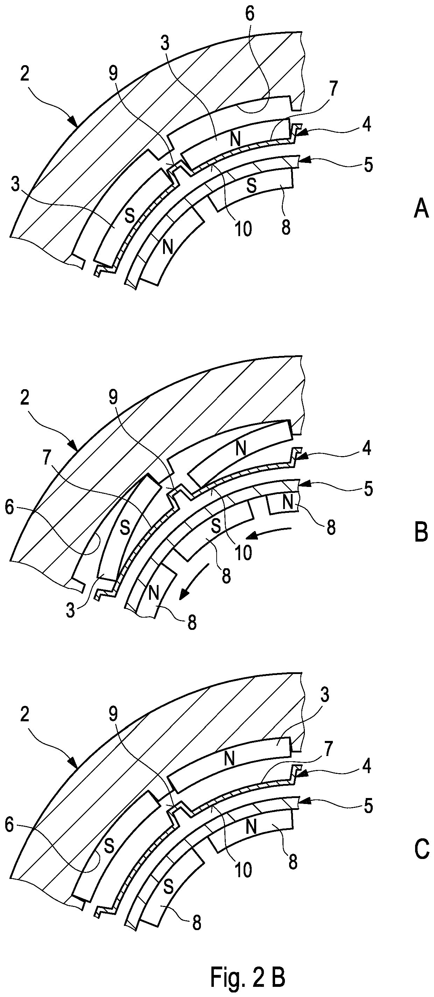

Figs. 2A und 2B sowie Figs. 3A und 3B zeigen die vorstehend beschriebene Vorrichtung 1 bzw. das vorstehend beschriebene Verfahren gemäß einem zweiten (Figs. 2A und 2B) und einem dritten Ausführungsbeispiel (Figs. 3A und 3B). Gleiche Elemente sind insofern mit denselben Bezugszeichen versehen, wobei im Folgenden nunmehr nur noch auf die Unterschiede eingegangen wird.

Das zweite und das dritte Ausführungsbeispiel unterscheiden sich von dem anhand von Figs. 1A und 1B erörterten ersten Ausführungsbeispiel dadurch, dass die Vorrichtung 1 nicht mehr für einen Scheibenläufer/Flachläufer hergerichtet ist bzw. der Magnetträger 2 als solcher ausgebildet ist. Vielmehr ist der Magnetträger 2 gemäß dem in Figs 2A und 2B gezeigten zweiten Ausführungsbeispiel als Innenläufer und gemäß dem in Figs. 3A und 3B gezeigten dritten Ausführungsbeispiel als Außenläufer ausgebildet bzw. die entsprechende Vorrichtung 1 jeweils zur Bestückung eines solchen ausgebildet.

Abgesehen von der entsprechenden auf die Ausbildung des Magnetträgers 2 abgestimmten geometrischen Ausbildung von Führungsträger 4 und Übertragungsmagnetträger 5 ist die jeweilige Vorrichtung 1 ansonsten identisch zu dem ersten Ausführungsbeispiel ausgebildet. Auch die Durchführung des Verfahrens zur Bestückung des Magnetträgers 2 durch die Vorrichtung 1 erfolgt analog zu dem ersten Ausführungsbeispiel. Zur Vermeidung von Wiederholungen wird insofern auf die vorstehenden Erörterungen bzgl. Figs. 1A und 1B verwiesen, die analog auf Figs. 2A und 2B sowie Figs. 3A und 3B anwendbar ist.

In allen Ausführungsformen entspricht die Lage der Führungspositionen 7 des Führungsträgers 4 formkomplementär der Lage der Aufnahmepositionen 6 der Magnetträger 2, und es gleichen sich die Lage und Polarisierung der Magnetbereiche 8 des Übertragungsmagnetträgers 5 mit der Lage der Einzelmagnete 3 auf dem Magnetträger 2 nach vollendeter Umsetzung.

Die Erfindung erlaubt die Vereinfachung der Handhabung bei der Bestückung von verschiedensten Magnetträgern 2, d.h. Läufer- oder Statorrohlingen mit Neodym-Magneten, wobei auch andere Bestückungsaufgaben deutlich vereinfacht werden können. Es können Magnetträger 2 verschiedenster Baugrößen und Durchmesser bestückt und der Bestückungsvorgang automatisiert überwacht werden. Die Bestückungszeit eines vollständigen Läufers beträgt insbesondere wenige Sekunden in Abhängigkeit vom Magnetträger 2. Es muss lediglich ein Bediener des Magnetbestückungssystems eingesetzt werden, der lediglich zur Aufnahme und Entnahme des Magnetträgers 2 sowie zur Auffüllung der Permanentmagnetmagazine zur Bestückung der Führungsträger 4 tätig werden muss. Die Erfindung eignet sich für vergleichbare Übergabeaufgaben für magnetische Werkstoffe, wobei der Führungsträger 4 und der Übertragungsmagnetträger 5 entsprechend angepasst werden kann.

### Bezugszeichenliste

- 1: Vorrichtung
- 2: Magnetträger
- 3: Einzelmagnete
- 4: Führungsträger
- 5: Übertragungsmagnetträger
- 6: Aufnahmepositionen
- 7: Führungsposition
- 8: Magnetbereiche
- 9: erste Oberfläche
- 10: zweite Oberfläche

## Patentansprüche

1. Verfahren zur Bestückung eines permanentmagnetischen Läufers oder Stators einer elektrischen Maschine mit vormagnetisierten Einzelmagneten (3), wobei der Läufer oder Stator einen Magnetträger (2) mit vordefinierten Aufnahmepositionen (6) zur Aufnahme vormagnetisierter Einzelmagnete (3) umfasst, wobei benachbarte Einzelmagnete (3) alternierende Polungen N/S in Bezug auf ihre Lage auf dem Magnetträger (2) aufweisen, **dadurch gekennzeichnet, dass** die Einzelmagnete (3) zunächst kopfüber zur Lage in der Aufnahmeposition (6) in Führungspositionen (7) auf einer ersten Oberfläche (9) eines Führungsträgers (4) entsprechend ihrer Polung und Position auf dem Magnetträger (2) temporär angeordnet werden, und ein Übertragungsmagnetträger (5) benachbart zu einer zweiten Oberfläche (10) des Führungsträgers (4) angeordnet ist, die der ersten Oberfläche (9) entgegengesetzt ist, wobei der Übertragungsmagnetträger (5) benachbart alternierend gepolte Magnetbereiche (8) umfasst, die gegenpolig zu den Einzelmagneten (3) in den Führungspositionen (7) auf dem Führungsträger (4) sind, so dass die Einzelmagnete (3) in den Führungspositionen (7) auf dem Führungsträger (4) temporär durch die Magnetbereiche (8) des Übertragungsmagnetträgers (5) magnetisch fixiert sind, wonach der Führungsträger (4) mit eingesetzten Einzelmagneten (3) und dem Übertragungsmagnetträger (5) in eine Übergabeposition benachbart zu entsprechenden Aufnahmepositionen (6) der Einzelmagnete (3) des Magnetträgers (2) gebracht wird, und wonach durch eine Veränderung der relativen Position des Übertragungsmagnetträgers (5) zum Führungsträger (4) oder einer Veränderung der magnetischen Polung der Magnetbereiche (8) des Übertragungsmagnetträgers (5) mittels magnetischer Abstoßungskräfte ein gesteuertes Umsetzen der Einzelmagnete (3) vom Führungsträger (4) auf den Magnetträger (2) erfolgt.

2. Verfahren nach Anspruch 1, **dadurch gekennzeichnet, dass** die Magnetbereiche (3) des Übertragungsmagnetträgers (5) aus Einzelmagneten bestehen, oder durch elektromagnetische Elemente, insbesondere Spulenelemente oder Magnetfeldjoche eines Elektromagneten, ausgebildet sind.

3. Verfahren nach Anspruch 1 oder 2, **dadurch gekennzeichnet, dass** das Umsetzen der Einzelmagnete (3) vom Führungsträger (4) auf den Magnetträger (2) durch Veränderung der relativen Lage der Magnetbereiche (8) des Übertragungsmagnetträgers (5) zu den Einzelmagneten (3) des Führungsträgers (4) mittels Parallelverschiebung und/oder Axialverschiebung der Magnetbereiche (8) zu der zweiten Oberfläche (10) des Führungsträgers (4), insbesondere Drehung oder Relativverschiebung des Übertragungsmagnetträger (5) zum Führungsträger (4), erfolgt, sodass sich die Position der Magnetbereiche (8) des Übertragungsmagnetträgers (5) gegenüber den Führungspositionen (7) des Führungsträgers (4) derart ändert, dass durch Magnetkraft ein gesteuerter Ablöseimpuls auf jeden Einzelmagnet (3) ausgeübt wird, sodass dieser aus der Führungsposition (7) auf die zugeordnete Aufnahmeposition (6) des Magnetträgers (2) übergeht,

4. Verfahren nach einem der vorgenannten Ansprüche, **dadurch gekennzeichnet, dass** das Umsetzen der Einzelmagnete (3) vom Führungsträger (4) auf den Magnetträger (2) durch Veränderung der magnetischen Polung der Magnetbereiche (8) des Übertragungsmagnetträgers (5) derart erfolgt, dass sich deren magnetische Polarität kontinuierlich oder stufenweise derart ändert, dass jeder Einzelmagnet (3) mittels magnetischer Abstoßungskraft der Magnetbereiche (8) des Übertragungsmagnetträgers (5) aus der jeweiligen Führungsposition (7) des Führungsträgers (4) auf die jeweils zugeordnete Aufnahmeposition (6) des Magnetträgers (2) umgesetzt wird.

5. Verfahren nach einem der vorgenannten Ansprüche, **dadurch gekennzeichnet, dass** der Führungsträger (4) mit Führungspositionen (7) formkomplementär zu dem Magnetträger (2) mit Aufnahmepositionen (6) ausgebildet ist, und der Übertragungsmagnetträger (5) mit Magnetbereichen (8) formkomplementär zum Führungsträger (4) mit Führungsposition (7) ausgebildet ist, wobei Magnetträger (2), Führungsträger (4) und Übertragungsmagnetträger (5) insbesondere stangenförmig, scheibenförmig, innenzylindermantel- oder außenzylindermantelförmig ausgebildet sind.

6. Verfahren nach einem der vorgenannten Ansprüche, **dadurch gekennzeichnet, dass** auf die den Aufnahmepositionen (6) des Magnetträgers (2) zugewandten Oberflächen der Einzelmagnete (3) vor oder nach dem Aufsetzen in die Führungspositionen (7) des Führungsträgers (4) eine Haftschicht aufgebracht wird.

7. Verfahren nach einem der vorgenannten Ansprüche, **dadurch gekennzeichnet, dass** der Führungsträger (4) aus einem ferromagnetischen Material, insbesondere einem Material mit Eisen, Nickel- oder Kobaltbestandteilen, oder aus einem paramagnetischen Material, insbesondere Aluminium oder Kunststoff besteht.

8. Vorrichtung (1) zum Bestücken eines permanentmagnetischen Läufers oder Stators einer elektrischen Maschine mit vormagnetisierten Einzelmagneten (3) nach einem Verfahren der vorgenannten Ansprüche 1 bis 7, wobei der Läufer oder Stator einen Magnetträger (2) mit vordefinierten Aufnahmepositionen (6) zur Aufnahme vormagnetisierter Einzelmagnete (3) umfasst, **dadurch gekennzeichnet, dass** zumindest ein Führungsträger (4) und zumindest ein Übertragungsmagnetträger (5) umfasst sind, deren relative Position zueinander und zu dem Magnetträger (2) oder eine Polung der Magnetbereiche (8) des Übertragungsmagnetträgers (5) zu den Führungspositionen (7) des Führungsträgers (4) veränderlich sind.

## Claims

1. A method for fitting a permanent magnetic rotor or stator of an electric motor with premagnetized individual magnets (3), wherein the rotor or stator comprises a magnet carrier (2) with predefined receiving positions (6) for receiving premagnetized individual magnets (3), wherein adjacent individual magnets (3) have alternating N/S polarities relative to their position on the magnet carrier (2), **characterized in that** the individual magnets (3) are initially temporarily arranged, upside-down to their positioning in the receiving position (6), in guide positions (7) on a first surface (9) of a guide carrier (4) corresponding to their polarity and position on the magnet carrier (2), and a transfer magnet carrier (5) is arranged adjacent to a second surface (10) of the guide carrier (4) which is opposite to the first surface (9), wherein the transfer magnet carrier (5) comprises adjacently magnetic regions (8) of alternating polarity which have the opposite polarity to the individual magnets (3) in the guide positions (7) on the guide carrier (4), so that the individual magnets (3) in the guide positions (7) on the guide carrier (4) are temporarily magnetically fixed by the magnetic regions (8) of the transfer magnet carrier (5), after which the guide carrier (4) is moved with inserted individual magnets (3) and with the transfer magnet carrier (5) into a transfer position adjacent to corresponding receiving positions (6) for the individual magnets (3) of the magnet carrier (2), and after which a controlled transfer of the individual magnets (3) from the guide carrier (4) onto the magnet carrier (2) takes place by a change in the position of the transfer magnet carrier (5) relative to the guide carrier (4) or by a change in the magnetic polarity of the magnetic regions (8) of the transfer magnet carrier (5) by means of magnetic repulsion forces.

2. The method according to claim 1, **characterized in that** the magnetic regions (3) of the transfer magnet carrier (5) consist of individual magnets, or are formed by electromagnetic elements, in particular by coil elements or magnetic field yokes of an electromagnet.

3. The method according to claim 1 or 2, **characterized in that** the transfer of the individual magnets (3) from the guide carrier (4) onto the magnet carrier (2) is achieved by a change in the position of the magnetic regions (8) of the transfer magnet carrier (5) relative to the individual magnets (3) of the guide carrier (4) by means of parallel displacement and/or axial displacement of the magnetic regions (8) relative to the second surface (10) of the guide carrier (4), in particular by means of rotation or displacement of the transfer magnet carrier (5) relative to the guide carrier (4), so that the position of the magnetic regions (8) of the transfer magnet carrier (5) changes relative to the guide positions (7) of the guide carrier (4) such that a controlled release impulse is exerted by magnetic force on each individual magnet (3), so that the latter transfers from the guide position (7) to the associated receiving position (6) of the magnet carrier (2).

4. The method according to any of the above claims, **characterized in that** the transfer of individual magnets (3) from the guide carrier (4) onto the magnet carrier (2) is achieved by a change in the magnetic polarity of the magnetic regions (8) of the transfer magnet carrier (5), such that their magnetic polarity changes continuously or gradually, such that each individual magnet (3) is transferred, by means of magnetic repulsion force of the magnetic regions (8) of the transfer magnet carrier (5), from the respective guide position (7) of the guide carrier (4) to the respective associated receiving position (6) of the magnet carrier (2).

5. The method according to any of the above claims, **characterized in that** the guide carrier (4) with guide positions (7) is designed complementary in shape to the magnet carrier (2) with receiving positions (6), and the transfer magnet carrier (5) with magnetic regions (8) is designed complementary in shape to the guide carrier (4) with guide positions (7), wherein the magnet carrier (2), the guide carrier (4) and the transfer magnet carrier (5) are designed in particular in the form of a rod, disk, inner cylinder jacket or outer cylinder jacket.

6. The method according to any of the above claims, **characterized in that** an adhesive coating is applied to those surfaces of the individual magnets (3) facing the receiving positions (6) of the magnet carrier (2) before or after they are set down into the guide positions (7) of the guide carrier (4).

7. The method according to any of the above claims, **characterized in that** the guide carrier (4) consists of a ferromagnetic material, in particular of a material with iron, nickel or cobalt constituents, or of a paramagnetic material, in particular aluminium or plastic.

8. A device (1) for fitting a permanent magnetic rotor or stator of an electric motor with premagnetized individual magnets (3) according to a method of the above claims 1 to 7, wherein the rotor or stator comprises a magnet carrier (2) with predefined receiving positions (6) for receiving premagnetized individual magnets (3), **characterized in that** at least one guide carrier (4) and at least one transfer magnet carrier (5) are comprised, whose positions relative to one another and to the magnet carrier (2), or a polarity of the magnetic regions (8) of the transfer magnet carrier (5) to the guide positions (7) of the guide carrier (4), are changeable.

## Revendications

1. Procédé d'équipement d'un rotor ou d'un stator à aimants permanents, d'une machine électrique avec des aimants individuels (3) prémagnétisés, sachant que le rotor ou stator comprend un porte-aimant (2) avec des positions de logement prédéfinies (6) pour accueillir des aimants individuels prémagnétisés (3), sachant que des aimants individuels voisins (3) présentent des polarités N/S qui alternent concernant leur position sur le porte-aimant (2), **caractérisé en ce que** les aimants individuels (3) sont disposés temporairement tout d'abord tête en bas dans la position de logement (6) dans des positions de guidage (7) sur une première surface (9) d'un support de guidage (4) selon leur polarité et position sur le porte-aimant (2), et qu'un porte-aimant de transfert (5) est disposé au voisinage d'une seconde surface (10) du support de guidage (4), laquelle est opposée à la première surface (9), sachant que le porte-aimant de transfert (5) comprend des zones d'aimant (8) polarisées de manière adjacente et alternée qui sont de pôle opposé aux aimants individuels (3) placés dans les positions de guidage (7) sur le support de guidage (4) de sorte que les aimants individuels (3) placés dans les positions de guidage (7) sur le support de guidage (4) sont fixés temporairement de manière magnétique par les zones d'aimant (8) du porte-aimant de transfert (5), à la suite de quoi le support de guidage (4) avec des aimants individuels (3) insérés et le porte-aimant de transfert (5) est mis dans une position de transfert avoisinant les positions de logement (6) correspondantes des aimants individuels (3) du porte-aimant (2), et à la suite de quoi un déplacement piloté des aimants individuels (3) a lieu, depuis le support de guidage (4) jusque sur le porte-aimant (2), par un changement de la position relative du porte-aimant de transfert (5) par rapport au support de guidage (4) ou un changement de la polarité magnétique des zones d'aimant (8) du porte-aimant de transfert (5), au moyen de forces de repoussement magnétiques.

2. Procédé selon la revendication 1, **caractérisé en ce que** les zones d'aimant (3) du porte-aimant de transfert (5) sont formées d'aimants individuels ou constituées d'éléments électromagnétiques, notamment d'éléments de bobines ou culasses magnétiques d'un électroaimant.

3. Procédé selon la revendication 1 ou 2, **caractérisé en ce que** le déplacement des aimants individuels (3) depuis le support de guidage (4) jusque sur le porte-aimant (2) a lieu par changement de la position relative des zones d'aimant (8) du porte-aimant de transfert (5) par rapport aux aimants individuels (3) du support de guidage (4) au moyen d'un déplacement parallèle et/ou déplacement axial des zones d'aimant (8) par rapport à la seconde surface (10) du support de guidage (4), notamment d'une rotation ou d'un déplacement relatif du porte-aimant de transfert (5) par rapport au support de guidage (4) de sorte que la position des zones d'aimant (8) du porte-aimant de transfert (5) change par rapport aux positions de guidage (7) du support de guidage (4) de telle sorte qu'une impulsion de détachement pilotée est exercée par la force magnétique sur chaque aimant individuel (3) de sorte que chacun d'eux passe de la position de guidage (7) à la position de logement (6) du porte-aimant (2) qui lui est attribuée.

4. Procédé selon l'une des revendications précédentes, **caractérisé en ce que** le déplacement des aimants individuels (3) depuis le support de guidage (4) jusque sur le porte-aimant (2) a lieu par changement de la polarité magnétique des zones d'aimant (8) du porte-aimant de transfert (5) de telle sorte que leur polarité magnétique change en continu ou par étapes de telle sorte que chaque aimant individuel (3) est déplacé, depuis la position de guidage (7) respective du support de guidage (4), jusque sur la position de logement (6) du porte-aimant (2), qui lui est attribuée respectivement, au moyen d'une force de repoussement magnétique des zones d'aimant (8) du porte-aimant de transfert (5).

5. Procédé selon l'une des revendications précédentes, **caractérisé en ce que** le support de guidage (4) est constitué de positions de guidage (7) de forme complémentaire au porte-aimant (2) avec des positions de logement (6), et que le porte-aimant de transfert (5) est constitué de zones d'aimants (8) de forme complémentaire au support de guidage (4) avec des positions de guidage (7), sachant que le porte-aimant (2), le support de guidage (4) et le porte-aimant de transfert (5) sont conçus notamment sous la forme d'une tige, d'une plaque, d'une enveloppe cylindrique intérieure ou d'une enveloppe cylindrique extérieure.

6. Procédé selon l'une des revendications précédentes, **caractérisé en ce que** sur les surfaces des aimants individuels (3), tournées vers les positions de logement (6) du porte-aimant (2), est appliquée une couche adhésive avant ou après la dépose dans les positions de guidage (7) du support de guidage (4).

7. Procédé selon l'une des revendications précédentes, **caractérisé en ce que** le support de guidage (4) se compose d'un matériau ferromagnétique, notamment d'un matériau avec des composants en fer, nickel ou cobalt, ou d'un matériau paramagnétique, notamment d'aluminium ou de plastique.

8. Dispositif (1) d'équipement d'un rotor ou d'un stator à aimants permanents, d'une machine électrique avec des aimants individuels (3) prémagnétisés selon un procédé des revendications 1 à 7 précitées, sachant que le rotor ou stator comprend un support magnétique (2) avec des positions de logement (6) prédéfinies pour accueillir des aimants individuels (3) prémagnétisés, **caractérisé en ce qu'**au moins un support de guidage (4) et au moins un porte-aimant de transfert (5) sont compris dont la position relative l'un par rapport à l'autre et par rapport au porte-aimant (2) ou qu'une polarité des zones d'aimant (8) du porte-aimant de transfert (5) par rapport aux positions de guidage (7) du support de guidage (4) sont modifiables.
